# EUROPEAN PATENT APPLICATION

(11) **EP 1 381 250 A1**
(43) Date of publication of application: **14.01.2004**
(21) Application number: 02707142.2
(22) Date of filing: 25.03.2002
(51) Int. Cl.: H04Q 7/38, H04J 13/00

(54) **CDMA RADIO BASE STATION APPARATUS AND DUPLEXING SYSTEM THEREOF**

(30) Priority: 26.03.2001 JP 2001088095
(71) Applicant: NEC Corporation, Minato-ku, Tokyo 108-0014 (JP)
(72) Inventor: OHWADA, Hideki, c/o NEC Corporation, Tokyo 108-0014 (JP)
(74) Representative: VOSSIUS & PARTNER
(86) International application number: PCT/JP2002/002839
(87) International publication number: WO 2002/078379

(57) **Abstract**

The present invention relates to a CDMA wireless base station apparatus. An object of the present invention is to provide a CDMA wireless base station apparatus which is able to shorten the period from a fault to recovery. Each of a 0-system spread processing section 3a and a 1-system spread processing section 3b which constitute a duplex configuration generates a perch channel signal, an active synthesized spread signal and a standby synthesized spread signal. In normal operation, the perch channel signal and the active synthesized spread signal from the 0-system spread processing section 3a and the standby spread signal from the 1-system spread processing section 3b are synthesized in a radio transmission processing circuit 4 and radiated from an antenna 5. When a fault occurs in the 0-th spread processing portion 3a, a switching control is performed so that the perch channel signal, the standby synthesized spread signal and the active synthesized spread signal from the 1-system spread processing section 3b are transmitted from the radio transmission processing circuit 4. The radio transmission processing circuit 4 radiates the perch channel signal, the standby synthesized spread signal and the active synthesized spread signal from the antenna 5. According to the present invention, the period need for recovery is shortened.

## Description

### Technical Field

The present invention relates to a CDMA radio base station apparatus and particularly relates to the duplexing of the CDMA radio base station apparatus.

### Background Art

If a fault occurs in a CDMA radio base station apparatus, it is necessary to swiftly restore the apparatus to its original condition so as not to cause call disconnect. Due to this, the CDMA radio base station apparatus is designed to have a duplex configuration. Therefore, in a transmission device in the CDMA radio base station apparatus, a spread processing section which performs a spread spectrum processing is duplexed to include an active spread processing section and a standby spread processing section. Conventionally, while duplexed spread signals are generated by the active spread processing section and the standby spread processing section, a perch channel signal is generated by one of the processing sections.

To take measures against a fault, software of the transmission device needs to always monitor which spread processing section generates the perch channel signal.

If a fault occurs in the spread processing section that generates the perch channel signal, the software of the transmission device controls the spread processing section to which no fault occurs to generate a new perch channel signal equal to the perch channel signal has been generated by the faulty spread processing section. As a result, the transmission is restored from a fault state.

### Disclosure of Invention

As can be seen, the software in the conventional transmission device always monitors the generation of the perch channel signal, and generates a new perch signal when a fault occurs in order to restore the device from a fault state. Therefore, the conventional transmission device has a disadvantage in that it takes long time for restoration.

It is an object of the present invention to provide a technique capable of solving the conventional disadvantage and performing swift switching since occurrence of a fault until restoration from the fault using a hardware without using a software.

According to the present invention, there is provided a duplexing system of a CDMA radio base station apparatus in a mobile communication system, said CDMA radio base station apparatus including a 0-system spread processing section and a 1-system spread processing section to constitute a duplex structure, wherein each of said 0-system spread processing section and said 1-system spread processing section comprises: duplex spreading means for spectrum-spreading a baseband signal to generate an active spread signal, and for spectrum-spreading a baseband signal to generate a standby spread signal; and perch channel generation means for generating a perch channel for specifying said CDMA radio base station apparatus, and wherein the duplexing system comprises: perch channel switching selection means for selecting either the perch channel from said 0-system spread processing section or the perch channel from said 1-system spread processing section; spread signal switching selection means for selecting an active spread signal and a stanby spread signal among the active spread signal and the standby spread signal from said 0-system spread processing section and the active spread signal and the standby spread signal from said 1-system spread processing section; and transmission control means for controlling transmission of the perch channel selected by the perch channel switching selection means and the active spread signal and the standby spread signal selected by the spread signal switching selection means.

In the duplexing system of the CDMA radio base station apparatus according to claim 1, if each of said 0-system spread processing section and said 1-system spread processing section operates normally, said perch channel switching selection means may select the perch channel from said 0- (1-) system spread processing section, said spread signal switching selection means may select the active spread signal from said 0- (1-) system spread processing section and the active spread signal from said 1- (0-) system spread processing section, and said transmission control means may transmit the perch channel from said 0- (1-) system spread processing section, the active spread signal from said 0- (1-) system spread processing section and the active spread signal from said 1- (0-) system spread processing section.

In the duplexing system of the CDMA radio base station apparatus, if a fault occurs in said 0- (1-) system spread processing section out of said 0-system spread processing section and said 1-system spread processing section which operate normally, said perch channel switching selection means may select the perch channel from said 1- (0-) system spread processing section, said spread signal switching selection means may select the active spread signal and the standby spread signal from said 1- (0-) system spread processing section, and said transmission control means may stop output of all the signals from said 0- (1-) system spread processing section in which the fault occurs, an transmit the perch channel, the active spread signal and the standby spread signal from said 1- (0-) system spread processing section selected by said spread signal selection means.

In the duplexing system of the CDMA radio base station apparatus, said transmission control means may comprise simultaneous switching and transmission control means for stopping the output of the all signals from said 0- (1-) system spread processing section in which the fault occurs and, at the same time, transmitting the perch channel, the active spread signal and the standby spread signal from said 1- (0-) system spread processing section selected by said spread signal switching selection means.

According to the present invention, there is provided a CDMA radio base station apparatus of a mobile communication system, comprising a spread processing section including a 0-system spread processing section and a 1-system spread processing section to constitute a duplex structure; and a radio transmission processing section converting signals from said 0-system spread processing section and said 1-system spread processing section into a radio signal, and transmitting the radio signal to an antenna, wherein each of said 0-system spread processing section and said 1-system spread processing section of said spread processing section comprises: a main control section for controlling entirety of said 0- (1-) system spread processing section; a spread section including an active spread section which spectrum-spreads a baseband signal to generate an active spread signal and a standby spread section which spectrum-spreads a baseband signal to generate a standby spread signal, thereby constituting the spread section to have a duplex structure; a perch channel generation section for generating and transmitting a perch channel for specifying said CDMA radio base station apparatus; a first addition and synthesization section for adding up the perch channel from said perch channel generation section and the active spread signal from said active signal spread section, and transmitting the added perch channel and active spread signal; a second addition and synthesization section for adding up the perch channel from said perch channel generation section and the standby spread signal from said standby signal spread section, and transmitting the added perch channel and standby spread signal; a perch channel output selection switching section for transmitting the perch channel from said perch channel generation section to one of said first addition and synthesization section and said second addition and synthesization section; a first output selection section for outputting and stopping output of the added perch channel and active spread signal from said first addition and synthesization section; a second output selection section for outputting and stopping the output of the added perch channel and standby spread signal from said second addition and synthesization section; an output control section controlling the output and output stop of said first output selection section and said second output selection section; a third addition and synthesization section for adding up and outputting the perch channel, the active spread signal and the standby spread signal output from said first output selection section and said second output selection section controlled by said output control section; and an alarm detection and notification section for detecting that a fault occurs in said spread processing section, notifying fault information to said main control section, and notifying switching control information to said main control section, said first output selection section, and said second output selection section, and wherein said radio transmission processing section converts the perch channel, the active spread signal and the standby spread signal from the third addition and synthesization section of said 0-system spread processing section and the third addition and synthesization section of said 1-system spread processing section into a radio signal, and transmits the radio signal to an antenna.

In the CDMA radio base station apparatus, if said 0-system spread processing section and said 1-system spread processing section normally operate and said alarm detection and notification section in each of said 0-system spread processing section and said 1-system spread processing section detects no fault, in said 0- (1-) system spread processing section, said main control section may control the perch channel output selection switching section to transmit the perch channel only to said first addition and synthesization section, and said output control section may control said first output selection section to be able to output the perch channel and the active spread signal and control said second output selection section to stop outputting the perch channel and the standby spread signal, said first addition and synthesization section may add up the perch channel from said perch channel generation section and the active spread signal from said active spread section, and transmit the added perch channel and active spread signal to said first output selection section, said first output selection section may transmit the received perch channel and active spread signal to said third addition and synthesization section, said second addition and synthesization section may receive only the standby spread signal from said standby spread section and transmit this standby spread signal to said second output selection section, said second output selection section may stop transmitting the received standby spread signal to said third addition and synthesization section, and said third addition and synthesization section may transmit only the perch channel and the active spread signal from said first output selection section to said radio transmission processing section, and in said 1- (0-) system spread processing section, said main control section may control the perch channel output selection switching section to transmit the perch channel only to said second addition and synthesization section, and said output control section may control said first output selection section to be able to output the active spread signal and control said second output selection section to stop outputting the perch channel and the standby spread signal, said first addition and synthesization section may receive only the active spread signal from said active spread section, and transmit this active spread signal to said first output selection section, said first output selection section may transmit the received active spread signal to said third addition and synthesization section, said second addition and synthesization section may add up the perch channel from said perch channel generation section and the standby spread signal from said standby spread section, and transmit the added perch channel and standby spread signal to said second output selection section, said second output selection section may stop transmitting the received perch channel and standby spread signal to said third addition and synthesization section, said third addition and synthesization section may transmit only the active spread signal from said first output selection section to said radio transmission processing section, and said radio transmission processing section may convert the perch channel and the active spread signal from the third addition and synthesization section of said 0- (1-) system spread processing section and the active spread signal from the third addition and synthesization section of said 1- (0-) system spread processing section into a radio signal, and transmit the radio signal to an antenna.

In the CDMA radio base station apparatus, if said alarm detection and notification section of said 0- (1-) system spread processing section out of said 0-system spread processing section and said 1-system spread processing section which have been normally operated detects that the fault occurs in said 0- (1-) system spread processing section, the alarm detection and notification section may transmit a switching control signal to said output control section of each of said 0-system spread processing section and said 1-system spread processing section; when said output control section of said 0- (1-) system spread processing section receives the switching control signal from said alarm detection and notification section, the output control section may control said first output selection section of said 0- (1-) system spread processing section to stop outputting the perch channel and the active spread signal; said first output selection section of said 0- (1-) system spread processing section may stop outputting the perch channel and the active spread signal; said 0- (1-) system spread processing section may stops transmitting all the signals to said radio transmission processing section; when said output control section of said 1- (0-) system spread processing section receives the switching control signal from said alarm detection and notification section, the output control section may control the output of said second output selection section of said 1- (0-) system spread processing section to be permitted; said second output selection section of said 1- (0-) system spread processing section may be controlled by said output control section to transmit the perch channel and the standby spread signal from said second addition and synthesization section of said 1- (0-) system spread processing section to said third addition and synthesization section of said 1-(0-) system spread processing section; said third addition and synthesization section of said 1- (0-) system spread processing section may add up the active spread signal from said first addition and synthesization section and the perch channel and the standby spread signal from said second addition and synthesization section, the active spread signal, the perch channel and the standby spread signal being already input, and transmit the added perch channel, active spread signal and standby spread signal to said radio transmission processing section, and said radio transmission processing section may convert the perch channel, the active spread signal and the standby spread signal from said 1- (0-) system spread processing section into a radio signal, and transmits the radio signal to the antenna.

In the CDMA radio base station apparatus, if said alarm detection and notification section of said 0- (1-) system spread processing section out of said 0-system spread processing section and said 1-system spread processing section which have been normally operated detects the fault, the alarm detection and notification section may transmit fault information to the main control section of each of said 0-system spread processing section and said 1-system spread processing section; when the main control section of said 0- (1-) system spread processing section receives the fault information from said alarm detection and notification section, the main control section may generate a first timing-added switching control signal having a first timing of stopping the output of said first output selection section of said 0- (1-) system spread processing section and transmit this first timing-added switching control signal to said output control section of said 0- (1-) system spread processing section; when the main control section of said 1- (0-) system spread processing section receives the fault information, the main control section may generate a second timing-added switching control signal having a second timing of permitting the output of said second output selection section of said 1- (0-) system spread processing section and transmit this second timing-added switching control signal to said output control section of said 1- (0-) system spread processing section; when said output control section of said 0- (1-) system spread processing section receives the first timing-added switching control signal from said main control section, the output control section may control the output of said first output selection section of said 0- (1-) system spread processing section to be stopped at the first timing; said first output selection section of said 0- (1-) system spread processing section may stop the output at the first timing; said 0- (1-) system spread processing section may stop transmitting all the signals to said radio transmission processing section at the first timing; when said output control section of said 1- (0-) system spread processing section receives the second timing-added switching control signal from said main control section, the output control section may control the output of said second output selection section of said 1- (0-) system spread processing section to be permitted at the second timing; said second output selection section of said 1- (0-) system spread processing section may be controlled by said output control section to transmit the perch channel and the standby spread signal from said second addition and synthesization section of said 1- (0-) system spread processing section to said third addition and synthesization section of said 1- (0-) system spread processing section at the second timing; said third addition and synthesization section of said 1-(0-) system spread processing section may add up the active spread signal from said first addition and synthesization section and the perch channel and the active spread signal from said second addition and synthesization section, the active spread signal, the perch channel and the standby spread signal being already continuously input, and transmit the added perch channel, active spread signal and standby spread signal to said radio transmission processing section; and said radio transmission processing section may convert the perch channel, the active spread signal and the standby spread signal from said 1- (0-) system spread processing section into a radio signal, and transmit the radio signal to the antenna.

In the CDMA radio base station apparatus, said main control section may set the first timing of said first timing-added switching control signal and the second timing of said second timing-added switching control signal so that a disconnect time when input from said 0- (1-) system spread processing section to said radio transmission processing section is discontinued coincides with a start time when the input of the perch channel, the active spread signal and the standby spread signal from said 1-(0-) system spread processing section to said radio transmission processing section starts.

Since the present invention is constituted to control selection-switching of the destination of the perch channel SCH and to be able to instantaneously perform switching until restoration by hardware without the need of generating the perch channel SCH generated by the spread processing section to which a fault occurs during the occurrence of the fault by the spread processing section that normally operates using software, it is advantageously possible to shorten time required for the restoration.

In addition, since the present invention is constituted so that it is unnecessary to monitor which of the duplexed spread processing sections generates the perch channel SCH using the software, it is advantageously possible to save software processing time and shorten time for switching between the duplexed spread processing sections.

Furthermore, the present invention is constituted so that each of the duplexed spread processing sections further has a duplex structure consisting of the active synthesized spread processing system and a standby synthesization and spread processing system and so that the occurrence of the fault is dealt with using the respective outputs of the active synthesized spread processing system and a standby synthesized spread processing system. Therefore, an instantaneous disconnect time that is generated due to the switching of the spread processing section is only the difference in time until the switching control signal arrives at each spread processing section, so that it is advantageously possible to shorten the instantaneous disconnect time and restore the apparatus from the fault.

Moreover, since the present invention is constituted to simultaneously switching the duplexed spread processing sections, it is advantageously possible to perform switching without disconnect time.

### Brief Description of Drawings

Fig. 1 is a block diagram illustrating the configuration of a transmission device in a CDMA radio base station apparatus in a first embodiment according to the present invention.
Figs. 2A and 2B are a block diagram illustrating the detailed configuration of the transmission device.
Figs. 3A and 3B are an illustration for explaining operations during a normal operation.
Figs. 4A and 4B are an illustration for explaining operations during a fault.
Fig. 5 is an operation time chart.

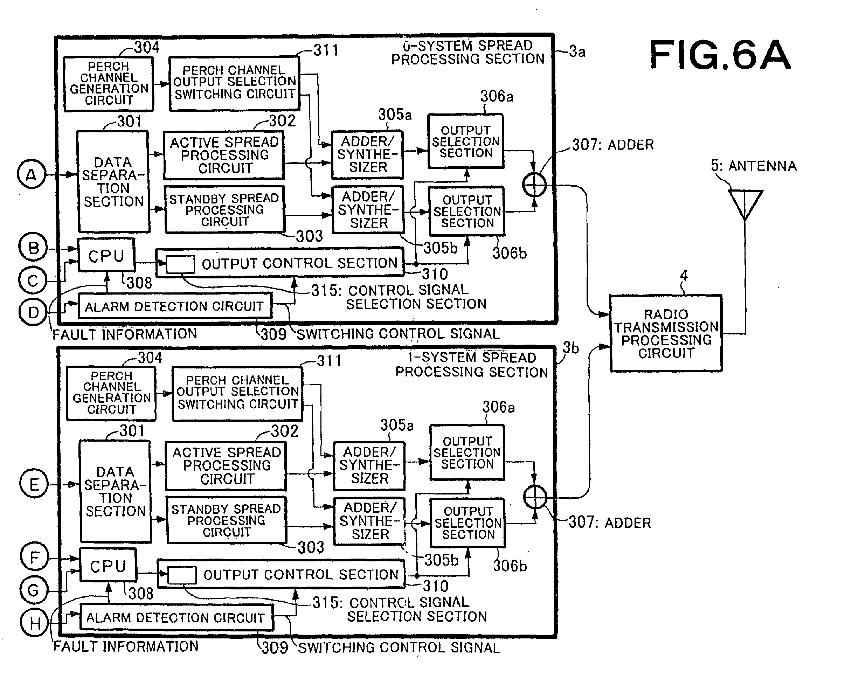

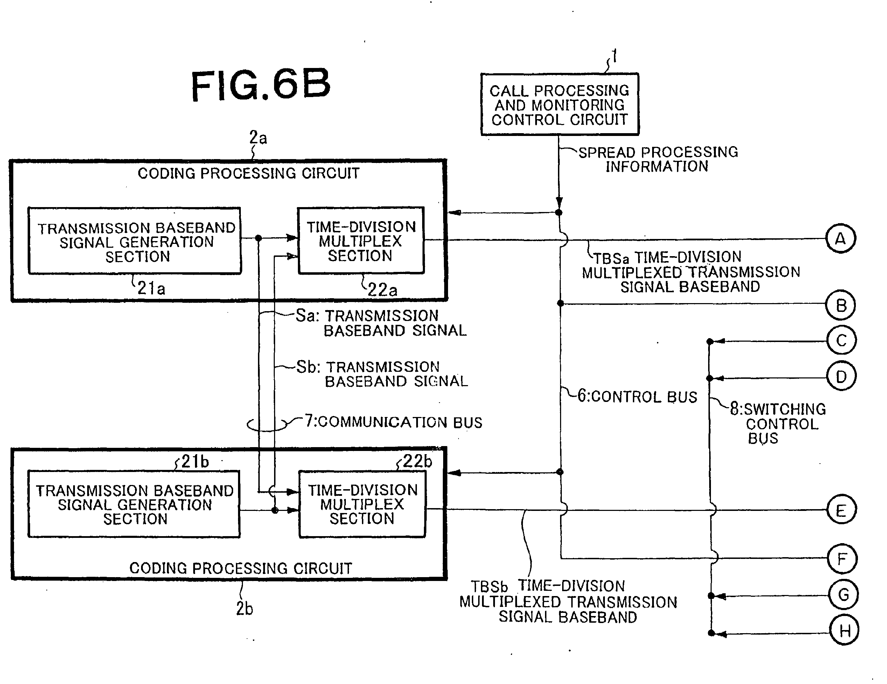

Figs. 6A and 6B are a block diagram illustrating the configuration of a transmission device in a CDMA radio base station apparatus in a second embodiment according to the present invention.

### Best Mode for Carrying Out the Invention

Embodiments of the present invention will be described hereinafter in detail with reference to the drawings.

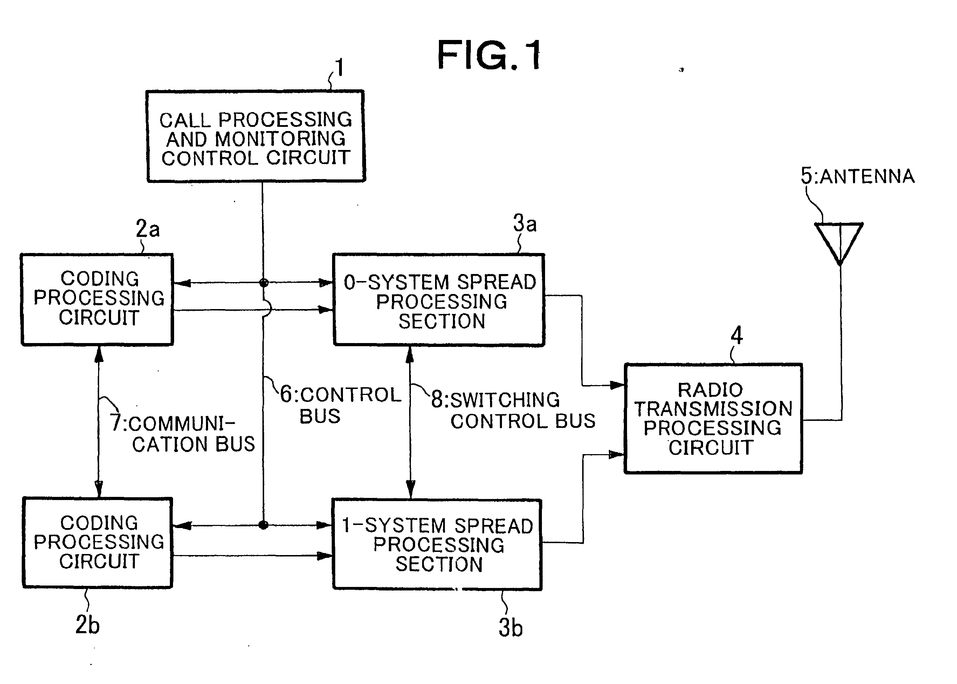

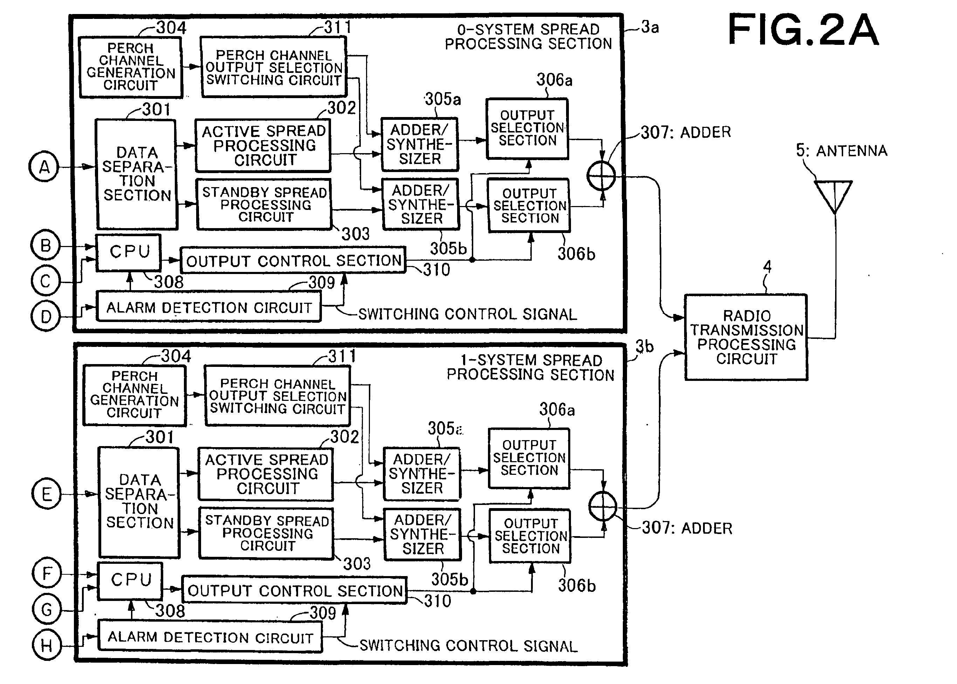

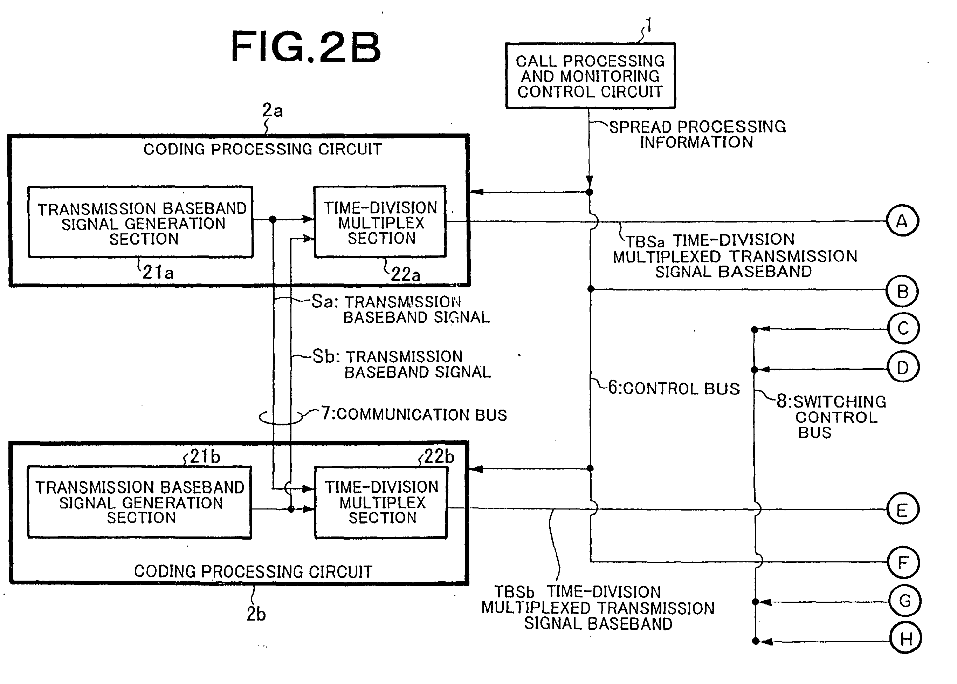

Fig. 1 is a block diagram illustrating a transmission device in a CDMA radio base station apparatus in the first embodiment according to the present invention, and Figs. 2A and 2B are a block diagram illustrating the detailed configuration of the transmission device.

Referring to Fig. 1, the transmission device of the CDMA (Code Division Multiple Access) radio base station apparatus in the first embodiment according to the present invention comprises a call processing and monitoring control circuit 1, coding processing circuits 2a and 2b, a 0-system spread processing section 3a, a 1-system spread processing section 3b, a radio transmission processing circuit 4, and an antenna 5.

The 0-system spread processing section 3a and the 1-system spread processing section 3b are equal in configuration, and the transmission device has a duplex structure consisting of the 0-system spread processing section 3a and the 2-system spread processing section 3b.

The detailed configuration of the transmission device will be described with reference to Figs. 2A and 2B.

The call processing and monitoring control circuit 1 monitors and controls the CDMA radio base station apparatus, manages resources of channel, and connects a control call related to arriving signal control and originating signal control. The circuit 1 transmits coding processing information to the coding processing circuits 2a and 2b and 0-system spread processing section 3a and 1-system spread processing section 3b through a control bus 6.

The coding processing circuits 2a and 2b include transmission baseband signal generation sections 21a and 21b and time division multiplex sections 22a and 22b, respectively, and the circuits 2a and 2b are connected to each other through a communication bus 7.

When the coding processing circuits 2a and 2b receive the coding processing information from the call processing and monitoring control circuit 1, the transmission baseband signal generation sections 21a and 21b generate transmission baseband signals, respectively.

The time division multiplex sections 22a and 22b transmit and receive transmission baseband signals to and from each other through the communication bus 7, time-division multiplex the transmission baseband signals received from the other coding processing circuit and those of their own coding processing circuits to generate time division multiplexed transmission baseband signals, and transmit the time division multiplexed baseband signals to the 0-system spread processing section 3a and the 1-system spread processing sections 3b, respectively.

Each of the 0-system spread processing section 3a and the 1-system spread processing section 3b performs a spread spectrum processing and transmits a signal spread by the spread spectrum processing to the radio transmission processing circuit 4. The 0-system spread processing section 3a and 1-system spread processing section 3b are connected to each other by a switching control bus 8 and constitute a duplex structure.

The radio transmission processing circuit 4 receives the spread signals from the 0-system spread processing section 3a and the 1-system spread processing section 3b, subjects these spread signals to synthetic addition, orthogonal modulation, radio frequency transformation, and transmission power control, generates a radio transmission signal, and transmits this radio transmission signal to the antenna 5.

The antenna 5 radiates the radio transmission signal.

The configurations of the 0-system spread processing section 3a and the 1-system spread processing section 3b will be described in more detail.

Each of the 0-system spread processing section 3a and the 1-system spread processing section 3b comprises a data separation section 301, an active spread processing circuit 302, a standby spread processing circuit 303, a perch channel generation circuit 304, adder/synthesizers 305a and 305b, output selection sections 306a and 306b, a perch channel output selection switching section 311, an adder 307, a CPU (main control section) 308, an alarm detection circuit 309, and an output control section 310.

The data separation section 301 separates the time division multiplexed transmission baseband signals received from the coding processing circuit 2 to individual channels, converts the signals into data according to data rates of the respective channels, outputs the individual channel data generated by the coding processing circuit connected to its own spread processing section to the active spread processing circuit 302, and outputs the individual channel data generated by the other coding processing circuit and transferred through the communication bus 7 to the coding processing circuit connected to its own spread processing section to the standby spread processing circuit 303.

The active spread processing circuit 302 and the standby spread processing circuit 303 receive a plurality of pieces of channel data separated according to the individual channels from the data separation section 301, conduct spectrum spreading modulation to the received channel data to generate spread signals for the respective channels, synthesize the generated spread signals for the respective channels throughout the channels to obtain an active synthesized spread signal and a standby synthesized spread signal, and transmit the active synthesized spread signal and the standby synthesized spread signal to the adder/synthesizers 305a and 305b, respectively.

The perch channel generation circuit 304, which includes a memory for setting a perch channel SCH (Synchronization Channel), generates a perch channel SCH and set it to the memory in response to an instruction from the CPU 308, and transmits the generated perch channel SCH to the output selection section 306c.

The perch channel output selection section 311 is controlled by the CPU 308 in advance and transmits the perch channel SCH to either one of the adder/synthesizer 305a and 305b. It is assumed herein that which adder/synthesizer the perch channel SCH is to be transmitted to is not changed during operation.

The adder/synthesizers 305a and 305b add up all of the transmitted spread signals for the respective channels output from the active spread processing circuit 302 and standby spread processing circuit 303 and the perch channel SCH generated by the perch channel generation circuit 304 for the active system and standby system in order to generate synthesized spread signals, and transmits the generated synthesized spread signals to the output selections 306a and 306b, respectively.

Each of the output selection sections 306a and 306b outputs the synthesized spread signal or stops outputting the synthesized spread signal in response to the switching control signal from the output control section 310.

The adder 307 adds up the synthesized spread signals from the output selection sections 306a and 306b, and transmits the added synthesized spread signal to the radio transmission processing circuit 4.

The alarm detection section 309 transmits the switching control signal to the output control section 310 of the 0-system spreading processing section 3a and the output control section 310 of the 1-system spreading processing section 3b.

The output control section 310 receives the switching control signal from the alarm detection circuits 309, and controls the output selection sections 306a and 306b to be switched from an output state to an output stop state or from the output stop state to the output state.

The CPU 308 is connected to the call processing and monitoring control circuit 1 by the control bus 6, and controls the data separation section 301, the active spreading processing circuit 302, the standby spreading processing circuit 303, the perch channel generation circuit 304, and the output control section 3310 by the software.

The operation of the embodiment of the present invention will next be described in detail with reference to the drawings.

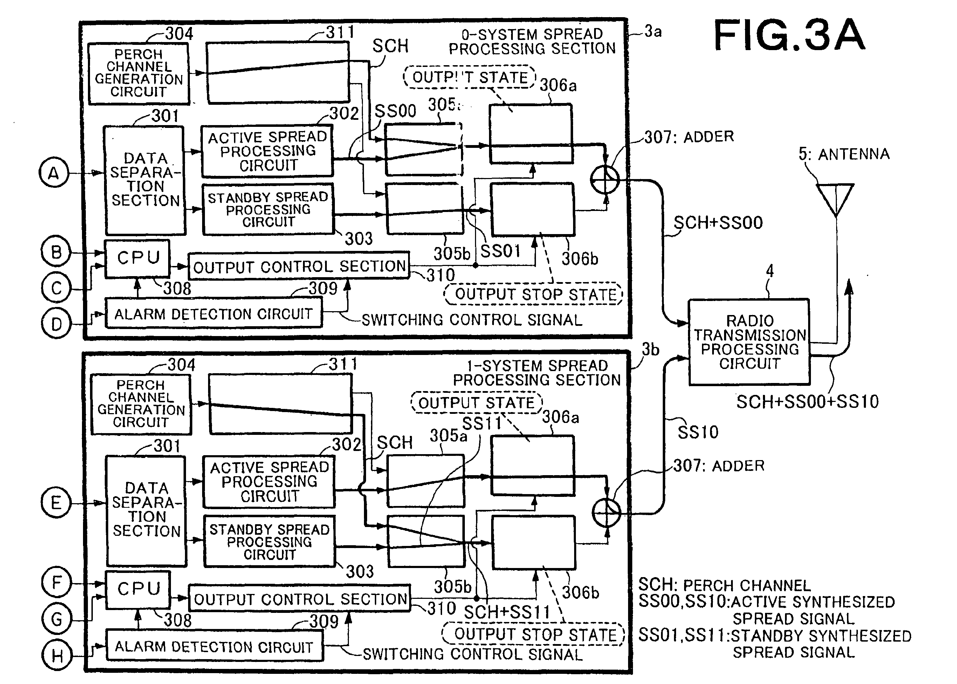

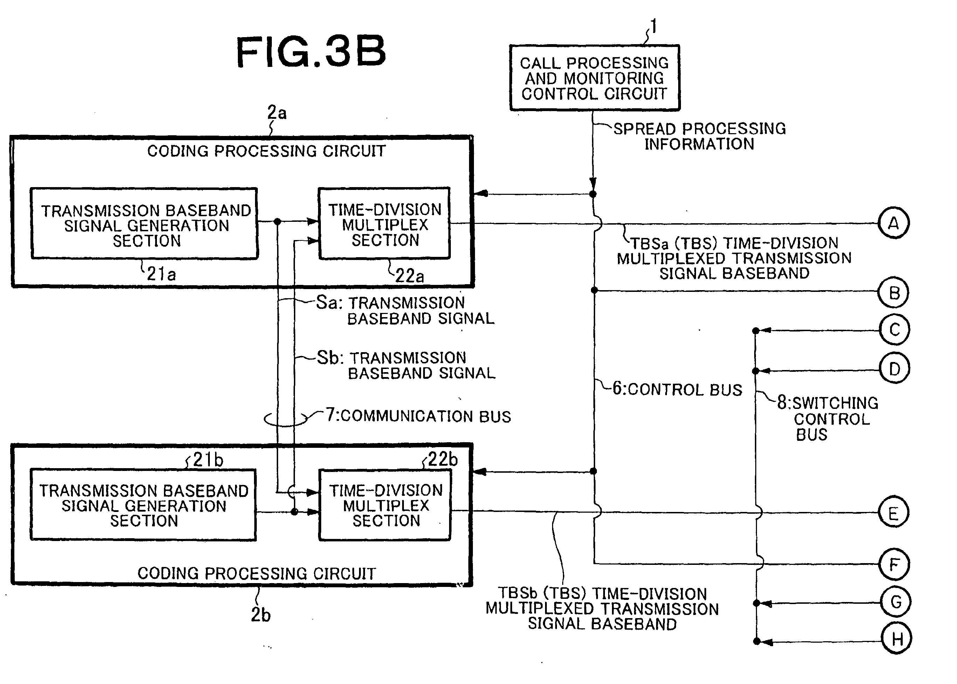

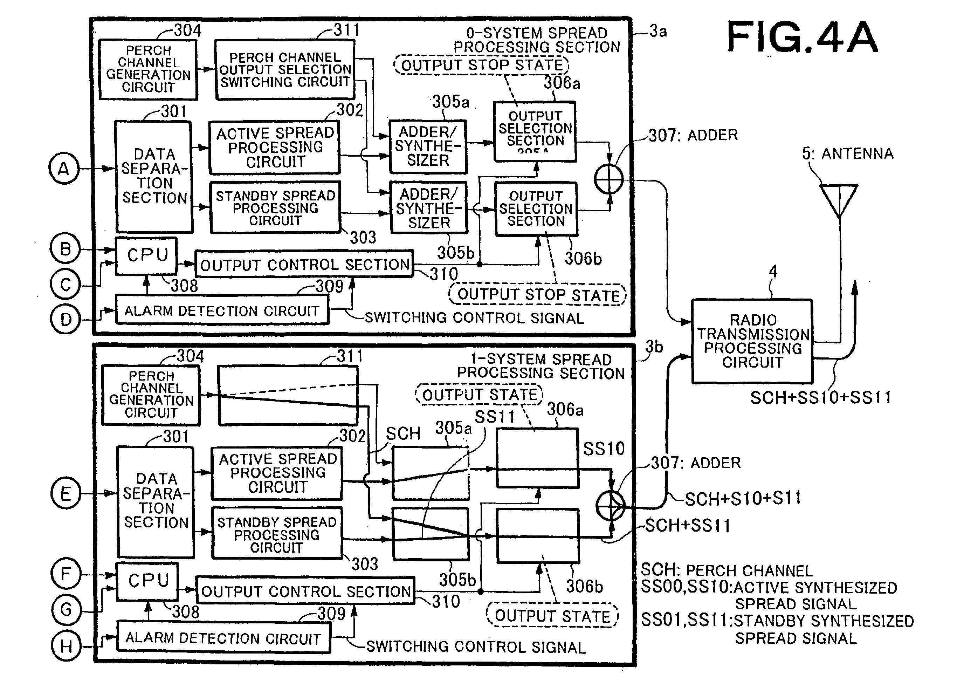

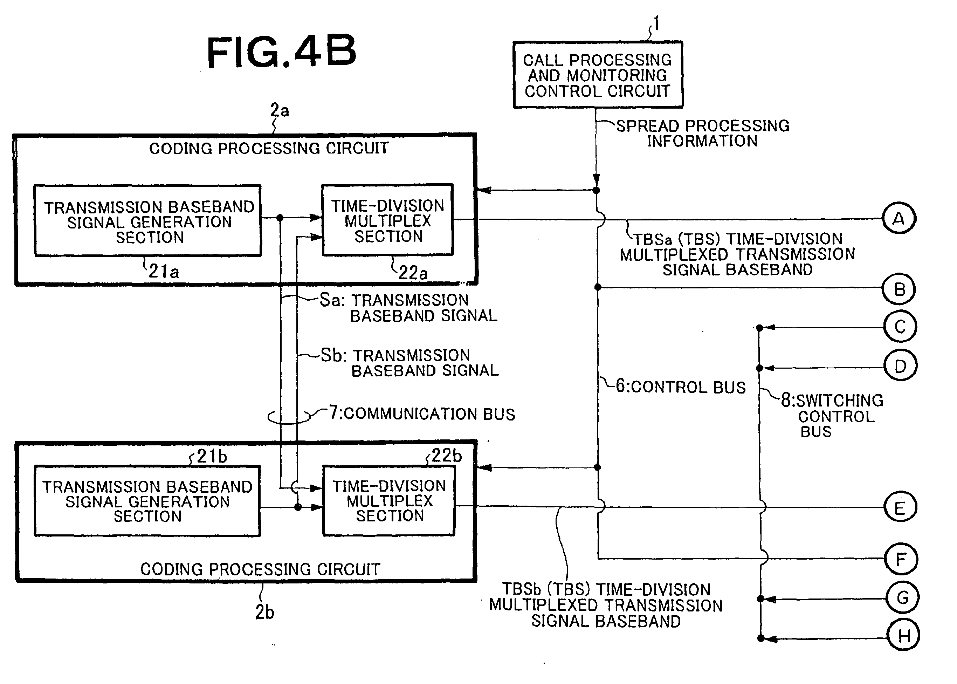

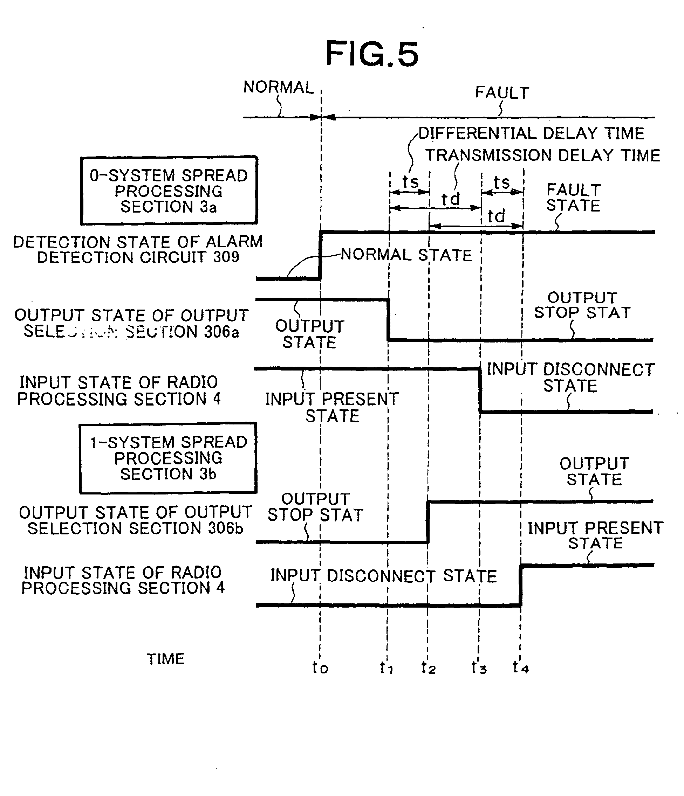

Figs. 3A and 3B are an illustration for explaining operations in normal operation, Figs. 4A and 4B are an illustration for explaining operations during a fault, and Fig. 5 is an operation time chart.

The operations will be described mainly referring to Figs. 3A, 3B, 4A, 4B and 5 as well as Figs. 1 2A and 2B.

The normal operation when the perch channel generation circuit 304 in the 0-system spreading processing section 3a in the transmission device in the CDMA radio base station apparatus shown in Fig. 1 generates the perch channel SCH and transmits the generated perch channel SCH will be described.

The operations during the normal operation will be described with reference to Figs. 3A and 3B.

The call processing and monitoring control circuit 1 transmits the coding processing information to the coding processing circuits 2a and 2b, the 0-system spreading processing section 3a and the 1-system spreading processing section 3b. At the same time, the call processing and monitoring control circuit 1 transmits the perch channel generation information for generating the perch channel SCH to the 0-system spread processing section 3a and the 1-system spread processing section 3b.

When the coding processing circuits 2a and 2b receive the coding processing information from the call processing and monitoring control circuit 1, the transmission baseband signal generation section 21a of the coding processing circuit 2a generates a transmission baseband signal Sa and transmits the transmission baseband signal Sa to the time division multiplex section 22a and the time division multiplex section 22b of the coding processing circuit 2b, and the transmission baseband signal generation section 21b of the coding processing circuit 2b generates a transmission baseband signal Sb and transmits the transmission baseband signal Sb to the time division multiplex section 22b and the time division multiplex section 22a of the coding processing circuit 2a.

The time division multiplex section 22a of the coding processing circuit 2a time-division multiplexes the transmission baseband signal Sa received from the transmission baseband signal generation section 21a and the transmission baseband signal Sb received from the transmission baseband signal generation section 21b to generate time division multiplexed transmission baseband signal TBSa, and transmits this time division multiplexed transmission baseband signal TBSa to the 0-system spread processing section 3a.

The time division multiplex section 22b of the coding processing circuit 2b time-division multiplexes the transmission baseband signal Sa received from the transmission baseband signal generation section 21a and the transmission baseband signal Sb received from the transmission baseband signal generation section 21b to generate time division multiplexed transmission baseband signal TBSb, and transmits this time division multiplexed transmission baseband signal TBSb to the 1-system spread processing section 3b.

At this time, the time division multiplexed transmission baseband signal TBSa and the time division multiplexed transmission baseband signal TBSb are time division multiplexed transmission baseband signals TBS equal in content.

The operations of the 0-system spread processing section 3a and the 1-system spread processing section 3b will be described.

In each of the 0-system spread processing section 3a and the 1-system spread processing section 3b, the output states of the perch channel output selection switching section 311 and the output selection sections 306a and 306b are set by the CPU 308 and the output control section 310 before starting operation as shown in Fig. 5. Namely, in the 0-system spread processing section 3a, the perch channel output selection switching section 311 is set to output the perch channel SCH to the adder/synthesizer 305a, the output selection section 306a is set into an output state, and the output selection section 306b is set into an output stop state.

On the other hand, in the 1-system spread processing section 3b, the perch channel output selection switching section 311 is set to output the perch channel SCH to the adder/synthesizer 305b, the output selection section 306a is set into an output state, and the output selection section 306b is set into an output stop state.

The operation of the 0-system spread processing section 3a will first be described.

When the 0-system spread processing section 3a in which the perch channel output selection switching section 311 and the output selection sections 306a and 306b are set as stated above receives the spread processing information from the call processing and monitoring control circuit 1, the data separation section 301 in the 0-system spread processing section 3a time-division demultiplexes the time division multiplexed transmission baseband signal TBSa (TBS) from the coding processing circuit 2a to the transmission baseband signal Sa and the transmission baseband signal Sb. Further, the data separation section 301 separates the transmission baseband signal Sa obtained by time-division demultiplex to individual channels for respective users, converts the signal into individual channel data CHDa according to data rates for the respective individual channels, and transmits these pieces of individual channel data CHDa to the active spread processing circuit 302. At the same time, the data separation section 301 separates the transmission baseband signal Sb obtained by time-division demultiplex to individual channels for the respective users, converts the signal into individual channel data CHDb according to data rates for the respective channels, and transmits these pieces of individual channel data CHDb to the standby spread processing circuit 303. That is, the transmission baseband signal Sa generated by the coding processing circuit 2a is input to the active spread processing circuit 302, whereas the transmission baseband signal Sb generated by the coding processing circuit 2b is input to the standby spread processing circuit 303.

When the active spread processing circuit 302 receives the individual channel data CHDa from the data separation section 301, the circuit 302 subjects these pieces of individual channel data CHDa to a spread processing for the respective channels to obtain spread signals, synthesizes these spread signals for the channels throughout the channels to generate an active synthesized spread signal SS00, and transmits this active synthesized spread signal SS00 to the adder/synthesizer 305a.

On the other hand, when the standby spread processing circuit 303 receives the individual channel data CHDb from the data separation section 301, the circuit 303 subjects these pieces of individual channel data CHDb to a spread processing for the respective channels to obtain spread signals, synthesizes these spread signals for the channels throughout the channels to generate a standby synthesized spread signal SS01, and transmits this standby synthesized spread signal SS01 to the adder/synthesizer 305b.

Next, to generate the perch channel SCH, the CPU 308 in the spread processing section 3a generates and sets the perch channel SCH in the internal memory of the perch channel generation circuit 304 based on the perch channel generation information when the CPU 308 receives the perch channel generation information from the call processing and monitoring control circuit 1.

The perch channel generation circuit 304 transmits the generated perch channel SCH to the perch channel output selection switching section 311.

Since the perch channel output selection switching section 311 in the spread processing section 3a is already output-selected in response to the instruction from the CPU 308, the switching section 311 transmits the received perch channel SCH only to the adder/synthesizer 305a and not to the adder/synthesizer 305b.

The adder/synthesizer 305a adds up the perch channel SCH received from the perch channel output selection switching section 311 and the active synthesized spread signal SS00 from the active spread processing circuit 302 and transmits the added perch channel SCH and active synthesized spread signal SS00 to the output selection section 306a.

When the output selection section 306a, which is already set into the output state by the output control section 310, receives the added perch channel SCH and active synthesized spread signal SS00, the output section 306a transmits the perch channel SCH and active synthesized spread signal SS00 to the adder 307.

On the other hand, since the perch channel output selection switching section 311 is set not to transmit the perch channel SCH to the adder/synthesizer 305b, the adder/synthesizer 305b receives only the standby synthesized spread signal SS01 from the standby spread processing circuit 303 and transmits the standby synthesized spread signal SS01 to the output selection section 306b.

Since the output selection section 306b is already set into the output stop state by the output control section 310, the output selection section 306b does not transmit the standby synthesized spread signal SS01 from the adder/synthesizer 305b to the adder 307.

The adder 307 transmits the perch channel SCH and the active synthesized spread signal SS00 from the output selection section 306a to the radio transmission processing circuit 4.

Next, the operation of the 1-system spread processing section 3b will be described.

When the 1-system spread processing section 3b in which the perch channel output selection switching section 311 is set to output the perch channel SCH to the adder/synthesizer 305b, the output selection section 306a is set into an output state, and the output selection section 306b is set into an output stop state receives the spread processing information from the call processing and monitoring control circuit 1, the data separation section 301 in the 1-system spread processing section 3b time-division demultiplexes the time division multiplexed transmission baseband signal TBSa (TBS) from the coding processing circuit 2a to the transmission baseband signal Sa and the transmission baseband signal Sb. Further, the data separation section 301 separates the transmission baseband signal Sa obtained by time-division demultiplex to individual channels for respective users, converts the signal into individual channel data CHDa according to data rates for the respective individual channels, and transmits these pieces of individual channel data CHDa to the active spread processing circuit 302. At the same time, the data separation section 301 separates the transmission baseband signal Sb obtained by time-division demultiplex to individual channels for the respective users, converts the signal into individual channel data CHDb according to data rates for the respective channels, and transmit these pieces of individual channel data CHDb to the standby spread processing circuit 303. That is, the transmission baseband signal Sa generated by the coding processing circuit 2a is input to the active spread processing circuit 302 ,whereas the transmission baseband signal Sb generated by the coding processing circuit 2b is input to the standby spread processing circuit 303.

When the active spread processing circuit 302 receives the individual channel data CHDa from the data separation section 301, the circuit 302 subjects these pieces of individual channel data CHDa to a spread processing for the respective channels to obtain spread signals, synthesizes these spread signals for the channels throughout the channels to generate an active synthesized spread signal SS10, and transmits this active synthesized spread signal SS10 to the adder/synthesizer 305a. It is noted that the active synthesized spread signal SS10 is equal in content to the active synthesized spread signal SS00 generated by the 0-system spread processing section 3a.

On the other hand, when the standby spread processing circuit 303 receives the individual channel data CHDb from the data separation section 301, the circuit 303 subjects these pieces of individual channel data CHDb to a spread processing for the respective channels to obtain spread signals, synthesizes these spread signals for the channels throughout the channels to generate a standby synthesized spread signal SS11, and transmits this standby synthesized spread signal SS11 to the adder/synthesizer 305b. It is noted that the standby synthesized spread signal SS11 is equal in content to the standby synthesized spread signal SS01 generated by the 0-system spread processing section 3a.

Next, to generate the perch channel SCH, the CPU 308 in the spread processing section 3b generates and sets the perch channel SCH in the internal memory of the perch channel generation circuit 304 based on the perch channel generation information when the CPU 308 receives the perch channel generation information from the call processing and monitoring control circuit 1. It is noted that the perch channel SCH generated by the perch channel generation circuit 304 in the spread processing section 3b is equal in content to the perch channel SCH generated by the perch channel generation circuit 304 in the spread processing section 3a.

The perch channel generation circuit 304 transmits the generated perch channel SCH to the perch channel output selection switching section 311.

Since the perch channel output selection switching section 311 in the spread processing section 3b is switching-selected to transmit the received perch channel SCH to the adder/synthesizer 305b in response to the instruction from the CPU 308, the switching section 311 transmits the received perch channel SCH only to the adder/synthesizer 305b and not to the adder/synthesizer 305a.

When the adder/synthesizer 305a receives the active synthesized spread signal SS10 from the active spread processing circuit 302, the adder/synthesizer 305a transmits this active synthesized spread signal SS10 to the output selection section 306a without doing anything to the signal SS10.

When the output selection section 306a, which is already set into the output state by the output control section 310, receives the active synthesized spread signal SS10 from the adder/synthesizer 305a, the output selection section 306a transmits the active synthesized spread signal SS10 to the adder 307.

On the other hand, the adder/synthesizer 305b adds up the perch channel SCH received from the perch channel output selection switching section 311 and the standby synthesized spread signal SS11 from the standby spread processing circuit 303, and outputs the added perch channel SCH and standby synthesized spread signal SS11 to the output selection section 306b.

The output selection section 306b, which is already set into the output stop state by the output control section 310, does not transmit the added perch channel SCH and standby synthesized spread signal SS11 to the adder 307 even though the section 306b receives them.

The adder 307 transmits the active synthesized spread signal SS10 from the output selection section 306a to the radio transmission processing circuit 4.

The radio transmission processing circuit 4 receives the perch channel SCH and the active synthesized spread signal SS00 from the 0-system spread processing section 3a and also receives the active synthesized spread signal SS10 from the 1-system spread processing section 3b, synthesizes and adds up the received perch channel SCH, the active synthesized spread signal SS00, and the active synthesized spread signal SS10, subjects them to orthogonal modulation, radio frequency transformation and transmission power control to generate a radio transmission signal, and transmits this radio transmission signal to the antenna 5.

Next, the operations when a fault occurs will be described. The operations during a fault will be described with reference to Figs. 4A and 4B.

As shown in the operation time chart of Fig. 5, it is assumed that a fault occurs in the 0-system spread processing section 3a while the 0-system spread processing section 3a and the 1-system spread processing section 3b normally operate as stated above.

When the alarm detection circuit 309 in the 0-system spread processing section 3a detects that a fault occurs in the 0-system spread processing section 3a, the alarm detection circuit 309 transmits a switching control signal to the output control section 310 of the 0-system spread processing section 3a and the output control section 310 of the 1-system spread processing section 3b.

When the output control section 310 of the 0-system spread processing section 3a receives the switching control signal from the alarm detection circuit 309, the output control section 310 transmits an output stop signal to the output selection section 306a of the 0-system spread processing section 3a so as to stop the output of the 0-system spread processing section 3a.

When the output selection section 306a of the 0-system spread processing section 3a receives the output stop signal, the output selection section 306a turns into an output stop state of stopping the output thereof at a time t1 as shown in Fig. 5, so that the output selection section 306a does not transmit any signal to the radio transmission processing circuit 4. At this time, the output selection section 306b is already in an output stop state by the setting at the time of starting operation.

Even though the output selection section 306a of the 0-system spread processing section 3a is set into the output stop state at the time t1, the perch channel SCH and the active synthesized spread signal SS00 transmitted to the output selection section 306a before the time t1, i.e., between a time t0 and the time t1 are being transmitted to the radio transmission processing circuit 4. Therefore, the time when input to the radio transmission processing circuit 4 is completely stopped is at a time t3 which is after a transmission delay time td caused by a transmission delay as shown in Fig. 5.

On the other hand, when the output control section 310 in the 1-system spread processing section 3b receives the switching control signal from the alarm detection circuit 309 of the 0-system spread processing section 3a, the output control section 310 transmits an output permit signal to the output selection section 306b of the 1-system spread processing section 3b.

When the output selection section 306b of the 1-system spread processing section 3b receives the output permit signal, the output selection section 306b is switched from the output stop state set so far to an output state at a time t2 as shown in Fig. 5. The time t2 is delayed from the time t1 at which the output selection section 306a of the 0-system spread processing section 3a changes from the output state to the output stop state, by a differential delay time ts. This differential delay time ts caused by the fact that arrival time of the switching control signal from the alarm detection circuit 309 of the 0-system spread processing section 3a at the output control section 310 of the 1-system spread processing section 3b is delayed by a difference in transmission line length from the arrival time of the switching control signal at the output control section 310 of the 0-system spread processing section 3a.

When the output selection section 306b of the 1-system spread processing section 3b turns into an output state at the time t2, the output selection section 306b transmits the perch channel SCH and the standby synthesized spread signal SS11, the transmission of which has been stopped so far, to the adder 307.

On the other hand, the output selection section 306a of the 1-system spread processing section 3b continuously transmits the active synthesized spread signal SS10 to the adder 307 before and after the time t0 at which the fault occurs in the 0-system spread processing section 3a.

When the adder 307 receives the active synthesized spread signal SS10 from the output selection section 306a and also receives the perch channel SCH and the standby synthesized spread signal SS11 from the output selection section 306b, the adder 307 adds up the perch channel SCH, the active synthesized spread signal SS10, and the standby synthesized spread signal SS11 and transmits them to the radio transmission processing circuit 4. The perch channel SCH, the active synthesized spread signal SS10, and the standby synthesized spread signal SS11 are input to the radio transmission processing circuit 4 at a time t4 which is delayed from the time t2 at which the output selection section 306b of the 1-system spread processing section 3b turns into an output state by the transmission delay time td.

That is, as shown in Fig. 5, at the time t3, nothing is input to the radio transmission processing circuit 4 from the 0-system spread processing section 3a, and at the time t4 which is delayed from the time t3 by the differential delay time ts, the perch channel SCH and the standby synthesized spread signal SS11 from the 1-system spread processing section 3b are input together with the active synthesized spread signal SS10 to the radio transmission processing circuit 4.

Eventually, an instantaneous disconnect time since the 0-system spread processing section 3a detects the fault at the alarm detection circuit 309 and stops transmitting the synthesized spread signal until the 1-system spread processing section 3b transmits the standby spread signal and the perch channel SCH relies only on the differential delay time ts which is a difference in time between the time required until the switching control signal is input to the output control section 310 of the spreading processing section 3b through the switching control bus 8 and the time required until the switching control signal is input to the output control section 310 of the spreading processing section 3a.

As stated above, due to the occurrence of the fault in the 0-system spread processing section 3a, the 1-system spread processing section 3b adds up the active synthesized spread signal SS10 generated by the 1-system spread processing section 3b and the standby synthesized spread signal SS11 and the perch channel SCH generated by the 1-system spread processing section 3b instead of only the standby synthesized spread signal SS01 and the perch channel SCH which the 1-system spread processing section 3a would have generated if no fault occurred, and inputs the added the active synthesized spread signal SS10 generated by the 1-system spread processing section 3b and standby synthesized spread signal SS11 and the perch channel SCH to the radio transmission processing circuit 4.

Accordingly, the desired synthesized spread signal generated by both the 0-system spread processing section 3b and the 0-system spread processing section 3a that are normally operating is generated only by the 1-system spread processing section 3b.

As can be seen, in this embodiment, if a fault occurs, it is unnecessary for the call processing and monitoring control circuit 1 to monitor the perch channel SCH generation state. Therefore it is unnecessary for the CPU 308 to perform a regeneration processing and a switching processing for the perch channel SCH using the software, thus making it possible to realize instantaneous switching only by the hardware.

The second embodiment will next be described.

The second embodiment is equal in configuration to the first embodiment except that the CPU 308, the alarm detection circuit 309, and the output control section 310 in the second embodiment have additional functions besides the functions of the CPU 308, the alarm detection circuit 309, the CPU 308, and the output control circuit 310 in the first embodiment. Therefore, description will be given only to the matters related to the additional functions in this embodiment.

The alarm detection circuit 309 in each of the 0-system spread processing section 3a and the 1-system spread processing section 3b detects that a fault occurs in its own spread processing section, and transmits fault information to the CPU 308 in its own spread processing section. In addition, as described in the first embodiment, the alarm detection circuit 309 transmits a switching control signal to the output control section 310 in each of the 0-system spread processing section 3a and the 1-system spread processing section 3b.

The CPU 308 receives the fault information from the alarm detection circuit 309, and transmits this fault information to the CPU 308 in the spread processing section in which no fault occurs. The CPU 308 in each of the 0-system spread processing section 3a and the 1-system spread processing section 3b sets a switching timing Tg which is a timing for switching the output state of the output selection section 306, generates a timing-added switching control signal having this switching timing Tg, and transmits this timing-added switching control signal to the output control section 310 in each of the 0-system spread processing section 3a and the 1-system spread processing section 3b.

The output control section 310 includes a control signal selection section 315 which selects and receives one of the timing-added switching control signal from the CPU 308 and the switching control signal from the alarm detection circuit 309. If the control signal selection section 315 selects and receives the timing-added switching control signal from the CPU 308, the output control section 310 controls the output selection section 306 to be changed from an output state to an output stop state or from an output stop state to an output state at the switching timing Tg. On the other hand, if the control signal selection section 315 selects and receives the switching control signal from the alarm detection circuit 309, the output control section 310 controls the output selection section 306 as described in the first embodiment.

Next, operations when a fault occurs in the second embodiment will be described.

It is assumed herein that a fault occurs in the 0-system spread processing section 3a while the 0-system spread processing section 3a and the 1-system spread processing section 3b normally operate.

When the alarm detection circuit 309 of the 0-system spread processing section 3a detects that a fault occurs in the 0-system spread processing section 3a, the alarm detection circuit 309 transmits fault information to the CPU 308 of the 0-system spread processing section 3a and the switching control signal to the output control section 310 of each of the 0-system spread processing section 3a and the 1-system spread processing section 3b as described in the first embodiment.

When the CPU 308 of the 0-system spread processing section 3a receives the fault information from the alarm detection circuit 309, the CPU 308 transmits the received fault information to the CPU 308 of the 1-system spread processing section 3b through the switching control bus 8 and also transmits the timing-added switching control signal having the switching timing Tg to the output control section 310 of the 0-system spread processing section 3a.

If the output control section 310 of the 0-system spread processing section 3a is set to select and receive the timing-added switching control signal, the output control section 310 receives the timing-added switching control signal from the CPU 308 of the 0-system spread processing section 3a and controls the output selection section 306a to be changed from an output state to an output stop state at the switching timing Tg included in this timing-added switching control signal.

On the other hand, when the CPU 308 of the 1-system spread processing section 3b receives the fault information from the CPU 308 of the 0-system spread processing section 3a, the CPU 308 transmits the timing-added switching control signal having the same switching timing Tg to the output control section 310 of the 1-system spread processing section 3b.

If the output control section 310 of the 1-system spread processing section 3b is set to select and receive the timing-added switching control signal, the output control section 310 receives the timing-added switching control signal and controls the output selection section 306b to be changed from an output stop state to an output state at the switching timing Tg included in this timing-added switching control signal.

Consequently, it is possible to simultaneously execute output stop and output permission. As a result, if it is necessary to stop the output of one of the spread processing sections for the purpose of maintenance, the CPU 308 can be controlled by the software to conduct simultaneous switching for controlling the output and the output stop at a specific timing and switching without disconnect time can be realized.

### Industrial Applicability

The present invention can be utilized for communications using CDMA radio transmission.

## Claims

1. A duplexing system of a CDMA radio base station apparatus in a mobile communication system, said CDMA radio base station apparatus including a 0-system spread processing section and a 1-system spread processing section to constitute a duplex structure,
wherein each of said 0-system spread processing section and said 1-system spread processing section comprises:
duplex spreading means for spectrum-spreading a baseband signal to generate an active spread signal, and for spectrum-spreading a baseband signal to generate a standby spread signal; and
perch channel generation means for generating a perch channel for specifying said CDMA radio base station apparatus, and
wherein the duplexing system comprises:
perch channel switching selection means for selecting either the perch channel from said 0-system spread processing section or the perch channel from said 1-system spread processing section;
spread signal switching selection means for selecting an, active spread signal and a standby spread signal
among the active spread signal and the standby spread signal from said 0-system spread processing section and the active spread signal and the standby spread signal from said 1-system spread processing section; and"
transmission control means for controlling transmission of the perch channel selected by the perch channel switching selection means and the active spread signal and the standby spread signal selected by the spread signal switching selection means.

2. The duplexing system of the CDMA radio base station apparatus according to claim 1, wherein
if each of said 0-system spread processing section and said 1-system spread processing section operates normally,
said perch channel switching selection means selects the perch channel from said 0- (1-) system spread processing section,
said spread signal switching selection means selects the active spread signal from said 0- (1-) system spread processing section and the active-spread signal from said 1- (0-) system spread processing section, and
said transmission control means transmits the perch channel from said 0- (1-) system spread processing section, the active spread signal from said 0- (1-) system spread processing section and the active spread signal from said 1- (0-) system spread processing section.

3. The duplexing system of the CDMA radio base station apparatus according to claim 1 or 2, wherein
if a fault occurs in said 0- (1-) system spread processing section out of said 0-system spread processing section and said 1-system spread processing section, which operate normally;
said perch channel switching selection means selects the perch channel from said 1- (0-) system spread processing section,
said spread signal switching selection means selects the active spread signal and the standby spread signal from said 1- (0-) system spread processing section, and
said transmission control means stops output of all the signals from said 0- (1-) system spread processing section in which the fault occurs, and transmits the perch channel, the active spread signal and the standby spread signal from said 1- (0-) system spread processing section selected by said spread signal selection means.

4. The duplexing system of the CDMA radio base station apparatus according to claim 1 or 2, wherein
said transmission control means comprises simultaneous switching and transmission control means for stopping the output of the all signals from said 0- (1-) system spread processing section in which the fault occurs and, at the same time, transmitting the perch channel, the active spread signal and the standby spread signal from said 1- (0-) system spread processing section selected by said spread signal switching selection means.

5. A CDMA radio base station apparatus of a mobile communication system, comprising:
a spread processing section including a 0-system spread processing section and a 1-system spread processing section to constitute a duplex structure; and
a radio transmission processing section converting signals from said 0-system spread processing section and said 1-system spread processing section into a radio signal, and transmitting the radio signal to an antenna,
wherein each of said 0-system spread processing section and said 1-system spread processing section of said spread processing section comprises:
a main control section for controlling entirety of said 0- (1-) system spread processing section;
a spread section including an active spread section which spectrum-spreads a baseband signal to generate an active spread signal and a standby spread section which spectrum-spreads a baseband signal to generate a standby spread signal, thereby constituting the spread section to have a duplex structure;
a perch channel generation section for generating and transmitting a perch channel for specifying said CDMA radio base station apparatus;
a first addition and synthesization section for adding up the perch channel from said perch channel generation section and the active spread signal from said active signal spread section, and transmitting the added perch channel and active spread signal;
a second addition and synthesization section for adding up the perch channel from said perch channel generation section and the standby spread signal from said standby signal spread section, and transmitting the added perch channel and standby spread signal;
a perch channel output selection switching section for transmitting the perch channel nom said perch channel generation section to one of said first addition and synthesization section and said second addition and synthesization section;
a first output selection section for outputting and stopping output of the added perch channel and active spread signal from said first addition and synthesization section;
a second output selection section for outputting and stopping the output of the added perch channel and standby spread signal from said second addition and synthesization section;
an output control section controlling the output and output stop of said first output selection section and said second output selection section;
a third addition and synthesization section for adding up and outputting the perch channel, the active spread signal and the standby spread signal output from said first output selection section and said second output selection section controlled by said output control section; and
an alarm detection and notification section for detecting that a fault occurs in said spread processing section, notifying fault information to said main control section, and notifying switching control information to said main control section, said first output selection section, and said second output selection section, and
wherein said radio transmission processing section converts the perch channel, the active spread signal and the standby spread signal from the third addition and synthesization section of said 0-system spread processing section and the third addition and synthesization section of said 1-system spread processing section into a radio signal, and transmits the radio signal to an antenna.

6. The CDMA radio base station apparatus according to claim 5, wherein
if said 0-system spread processing section and said 1-system spread processing section normally operate and said alarm detection and notification section in each of said 0-system spread processing section and said 1-system spread processing section detects no fault,
in said 0- (1-) system spread processing section,
said main control section controls the perch channel output selection switching section to transmit the perch channel only to said first addition and synthesization section, and said output control section controls said first output selection section to be able to output the perch channel and the active spread signal and controls said second output selection section to stop outputting the perch channel and the standby spread signal,
said first addition and synthesization section adds up the perch channel from said perch channel generation section and the active spread signal from said active spread section, and transmits the added perch channel and active spread signal to said first output selection section,
said first output selection section transmits the received perch channel and active spread signal to said third addition and synthesization section,
said second addition and synthesization section receives only the standby spread signal from said standby spread section and transmits this standby spread signal to said second output selection section,
said second output selection section stops transmitting the received standby spread signal to said third addition and synthesization section, and
said third addition and synthesization section transmits only the perch channel and the active spread signal from said first output selection section to said radio transmission processing section, and
in said 1- (0-) system spread processing section,
said main control section controls the perch channel output selection switching section to transmit the perch channel only to said second addition and synthesization section, and said output control section controls said first output selection section to be able to output the active spread signal and controls said second output selection section to stop outputting the perch channel and the standby spread signal,
said first addition and synthesization section receives only the active spread signal from said active spread section, and transmits this active spread signal to said first output selection section,
said first output selection section transmits the received active spread signal to said third addition and synthesization section,
said second addition and synthesization section adds up the perch channel from said perch channel generation section and the standby spread signal from said standby spread section, and transmits the added perch channel and standby spread signal to said second output selection section,
said second output selection section stops transmitting the received perch channel and standby spread signal to said third addition and synthesization section,
said third addition and synthesization section transmits only the active spread signal from said first output selection section to said radio transmission processing section, and
said radio transmission processing section converts the perch channel and the active spread signal from the third addition and synthesization section of said 0- (1-) system spread processing section and the active spread signal from the third addition and synthesization section of said 1- (0-) system spread processing section into a radio signal, and transmits the radio signal to an antenna.

7. The CDMA radio base station apparatus according to claim 5 or 6, wherein
if said alarm detection and notification section of said 0- (1-) system spread processing section out of said 0-system spread processing section and said 1-system spread processing section which have been normally operated detects that the fault occurs in said 0- (1-) system spread processing section, the alarm detection and notification section transmits a switching control signal to said output control section of each of said 0-system spread processing section and said 1-system spread processing section,
when said output control section of said 0- (1-) system spread processing section receives the switching control signal from said alarm detection and notification section, the output control section controls said first output selection section of said 0- (1-) system spread processing section to stop outputting the perch channel and the active spread signal,
said first output selection section of said 0- (1-) system spread processing section stops outputting the perch channel and the active spread signal,
said 0- (1-) system spread processing section stops transmitting all the signals to said radio transmission processing section,
when said output control section of said 1- (0-) system spread processing section receives the switching control signal from said alarm detection and notification section, the output control section controls the output of said second output selection section of said 1- (0-) system spread processing section to be permitted,
said second output selection section of said 1- (0-) system spread processing section is controlled by said output control section to transmit the perch channel and the standby spread signal from said second addition and synthesization section of said 1- (0-) system spread processing section to said third addition and synthesization section of said 1- (0-) system spread processing section,
said third addition and synthesization section of said 1- (0-) system spread processing section adds up the active spread signal from said first addition and synthesization section and the perch channel and the standby spread signal from said second addition and synthesization section, the active spread signal, the perch channel and the standby spread signal being already input, and transmits the added perch channel, active spread signal and standby spread signal to said radio transmission processing section, and
said radio transmission processing section converts the perch channel, the active spread signal and the standby spread signal from said 1-(0-) system spread processing section into a radio signal, and transmits the radio signal to the antenna.

8. The CDMA radio base station apparatus according to claim 5 or 6, wherein
if said alarm detection and notification section of said 0- (1-) system spread processing section out of said 0-system spread processing section and said 1-system spread processing section which have been normally operated detects the fault, the alarm detection and notification section transmits fault information to the main control section of each of said 0-system spread processing section and said 1-system spread processing section,
when the main control section of said 0- (1-) system spread processing section receives the fault information from said alarm detection and notification section, the main control section generates a first timing-added switching control signal having a first timing of stopping the output of said first output selection section of said 0- (1-) system spread processing section and transmits this first timing-added switching control signal to said output control section of said 0- (1-) system spread processing section,
when the main control section of said 1- (0-) system spread processing section receives the fault information, the main control section generates a second timing-added switching control signal having a second timing of permitting the output of said second output selection section of said 1- (0-) system spread processing section and transmits this second timing-added switching control signal to said output control section of said 1- (0-) system spread processing section,
when said output control section of said 0- (1-) system spread processing section receives the first timing-added switching control signal from said main control section, the output control section controls the output of said first output selection section of said 0- (1-) system spread processing section to be stopped at the first timing,
said first output selection section of said 0- (1-) system spread processing section stops the output at the first timing,
said 0- (1-) system spread processing section stops transmitting all the signals to said radio transmission processing section at the first timing,
when said output control section of said 1- (0-) system spread processing section receives the second timing-added switching control signal from said main control section, the output control section controls the output of said second output selection section of said 1- (0-) system spread processing section to be permitted at the second timing,
said second output selection section of said 1- (0-) system spread processing section is controlled by said output control section to transmit the perch channel and the standby spread signal from said second addition and synthesization section of said 1- (0-) system spread processing section to said third addition and synthesization section of said 1- (0-) system spread processing section at the second timing,
said third addition and synthesization section of said 1- (0-) system spread processing section adds up the active spread signal from said first addition and synthesization section and the perch channel and the active spread signal from said second addition and synthesization section, the active spread signal, the perch channel and the standby spread signal being already continuously input, and transmits the added perch channel, active spread signal and standby spread signal to said radio transmission processing section, and
said radio transmission processing section converts the perch channel, the active spread signal and the standby spread signal from said 1-(0-) system spread processing section into a radio signal, and transmits the radio signal to the antenna.

9. The CDMA radio base station apparatus according to claim 8, wherein
said main control section sets the first timing of said first timing-added switching control signal and the second timing of said second timing-added switching control signal so that a disconnect time when input from said 0- (1-) system spread processing section to said radio transmission processing section is discontinued coincides with a start time when the input of the perch channel, the active spread signal and the standby spread signal from said 1- (0-) system spread processing section to said radio transmission processing section starts.
